# EUROPEAN PATENT APPLICATION

(11) **EP 3 342 626 A1**
(43) Date of publication of application: **04.07.2018**
(21) Application number: 16206948.8
(22) Date of filing: 27.12.2016
(51) Int. Cl.: B60L 11/18, B25J 9/00, B67D 9/02

(54) **CHARGING CONNECTION DEVICE AND CHARGING ARRANGEMENT**

(71) Applicant: Mobimar Oy, 20101 Turku (FI)
(72) Inventor: Immonen, Aarno, 21250 Masku (FI); Immonen, Pauli, 21250 Masku (FI)
(74) Representative: Berggren Oy, Turku

(57) **Abstract**

The present invention relates to a charging connection device (100) that comprises an electrical connector (108) for electrically connecting the charging connection device (100) to an electric vessel (204), a first arm (101) having a first end and a second end, the electrical connector (108) being attached to the first end of the first arm (101), a second arm (102) having a first end and a second end, the first end of the second arm (102) being pivotally attached to the second end of the first arm (101) and the second end of the second arm (102) being attachable to a ramp (201), and means (103) for pivoting the first arm (101) relative to the second arm (102). The present invention also relates to charging arrangement.

## Description

### TECHNICAL FIELD OF THE INVENTION

The present invention relates to a charging connection device according to the preamble of the appended independent claim. The invention also relates to a charging arrangement incorporating such a charging connection device.

### BACKGROUND OF THE INVENTION

Strict environmental regulations force shipping companies to move from conventional diesel vessels to plug-in hybrid and all-electric vessels. These vessels have a battery system that provides electric power to an electric propulsion motor of the vessel.

A battery system of a plug-in hybrid or all-electric vessel can be charged with an onshore charging device. One known charging device is intended to be located on a mooring dock. The charging device allows a battery system of a vessel to be charged while the vessel is docked. Electric power is supplied to the battery system of the vessel through an electrical connector of the charging device that is arranged to be coupled to and decoupled from a counterpart electrical connector mounted on a side of the vessel manually by operating personnel.

A problem associated with the known charging device is that coupling and decoupling of the electrical connector is difficult and time-consuming. Another problem associated with the known charging device is that its use is difficult or even impossible in harsh weather conditions, which are typically characterised by high waves and changes in water level. Still another problem associated with the known charging device is that its use can be dangerous to the operating personnel.

### OBJECTIVES OF THE INVENTION

It is the main objective of the present invention to reduce or even eliminate the prior art problems presented above.

It is an objective of the present invention to provide a charging connection device that is connectable to an electric vessel for supplying electric power to a battery system of the electric vessel. In more detail, it is an objective of the invention to provide a charging connection device that can be coupled to and decoupled from a bow or stern of an electric vessel in a fast and reliable manner. It is a further objective of the present invention to provide a charging connection device enabling to supply electric power to a battery system of an electric vessel in harsh weather conditions.

It is also an objective of the invention to provide a charging arrangement for charging a battery system of an electric vessel having a ramp. It is a further objective of the invention to provide a charging arrangement enabling to charge a battery system of an electric vessel in harsh weather conditions.

In order to realise the above-mentioned objectives, the charging connection device according to the invention is characterised by what is presented in the characterising part of the appended independent claim. Advantageous embodiments of the invention are described in the dependent claims.

### DESCRIPTION OF THE INVENTION

A typical charging connection device according to the invention comprises an electrical connector for electrically connecting the charging connection device to an electric vessel, a first arm having a first end and a second end, the electrical connector being attached to the first end of the first arm, a second arm having a first end and a second end, the first end of the second arm being pivotally attached to the second end of the first arm and the second end of the second arm being attachable to a ramp, and first means for pivoting the first arm relative to the second arm.

The charging connection device according to the invention is used for electrically connecting an electric power source such as a charging device to an electric vessel. The charging connection device enables to supply electric power from the electric power source to the electric vessel so that a battery system of the electric vessel can be charged. By an electric vessel is meant a vessel, such as a ship, ferry, boat or the like that comprises a battery system for providing electric power to an electric propulsion motor of the vessel. The electric vessel can be an all-electric vessel or a plug-in hybrid vessel. On the all-electric vessel, all the power, for both propulsion and auxiliaries, comes from a battery system. A plug-in hybrid vessel has also a conventional diesel engine for producing electric power to the electric propulsion motor. A battery system of an electric vessel can be charged by coupling the electrical connector of the charging connection device to a counterpart electrical connector on the electric vessel and then supplying electric power to the battery system.

The charging connection device according to the invention comprises two arms, i.e. the first arm and the second arm, which are pivotally attached at their ends to each other. The relative position between the two arms, i.e. the angle between the first and second arms, can be changed by using the first means for pivoting the first arm relative to the second arm. The first pivoting means is attached to the first and second arms. By pivoting the first arm relative to the second arm, the electrical connector that is attached to the first end of the first arm can be moved to a desired height so that it can be coupled to a counterpart electrical connector mounted on the electric vessel. The counterpart electrical connector is preferably located on a bow or stern of the electric vessel. The electric vessel may alternatively have a counterpart electrical connector both on its bow and stern so that the battery system of the electric vessel can be charged, irrespective of whether the electric vessel is docked at its bow or stern.

When the electrical connector is coupled to the counterpart electrical connector of the electric vessel, the first arm can be kept immobile relative to the second arm. This can be done with the first pivoting means, which during the coupling time can be configured to prevent the pivoting of the first arm with respect to the second arm. Alternatively, the first pivoting means may be configured to actively move the first arm relative to the second arm so that the movement of the electric vessel due to waves and water level changes cannot easily damage the charging connection device. The first means for pivoting the first arm relative to the second arm may also be set into a freely moving state, thus allowing the first arm to pivot freely relative to the second arm.

The charging connection device may be connected to an electric power source such as a charging device. The electric power source can supply DC (direct current) power or AC (alternating current) power through the charging connection device to a battery system of an electric vessel. The electric power source is electrically coupled to the electrical connector of the charging connection device by means of cables or wires.

The charging connection device may comprise one or more electrical connectors. The electrical connector may comprise prongs for inserting into receptacles in the counterpart electrical connector. Alternatively, the electrical connector may comprise receptacles for receiving prongs of the counterpart electrical connector. Instead of using a galvanic connection between the electrical connector and the counterpart electrical connector, electric power may also be transferred by using an inductive coupling, preferably a resonant inductive coupling between the connectors. Resonant inductive coupling is the near field wireless transmission of electrical energy between two magnetically coupled coils that are part of resonant circuits tuned to resonate at the same frequency. A transmitter coil in the electrical connector can be used to transmit electric power across an intervening space to a receiver coil in the counterpart electrical connector.

The charging connection device according to the invention can be attached on a ramp, whereby a battery system of an electric vessel may be charged through the charging connection device while the electric vessel is docked to the ramp. The electric vessel can be arranged to be docked to the ramp at its bow or stern. The charging connection device is preferably attached close to the docking end of the ramp. The ramp is preferably pivotally mounted to the shore so that the docking end of the ramp can move up and down as a result of water interaction.

An advantage of the charging connection device according to the invention is that it can be connected to an electric vessel in an easy, fast and reliable manner. Another advantage of the charging connection device according to the invention is that since the height position of the electrical connector can be adjusted, the charging connection device may be easily connected to various electric vessels having counterpart electrical connectors at different heights. Still another advantage of the charging connection device according to the invention is that it enables to charge an electric vessel in difficult weather conditions because the charging connection device allows compensating the movement of the electric vessel due to waves and water level changes.

According to an embodiment of the invention the first means for pivoting the first arm relative to the second arm comprises one or more of the following: a pneumatic cylinder, a hydraulic cylinder or an electric cylinder attached between the first arm and the second arm. The number and type of the cylinders can vary depending on the application. Preferably, the first means for pivoting the first arm relative to the second arm comprises one or two cylinders attached between the first arm and the second arm.

According to an embodiment of the invention the charging connection device comprises second means for pivoting the second arm relative to the ramp. This arrangement enables to compensate the tilting of the ramp due to waves and water level changes.

According to an embodiment of the invention the second means for pivoting the second arm relative to the ramp comprises one or more of the following: a pneumatic cylinder, a hydraulic cylinder or an electric cylinder attached between the second arm and the ramp. The number and type of the cylinders can vary depending on the application. Preferably, the second means for pivoting the second arm relative to the ramp comprises one or two cylinders attached between the second arm and the ramp.

According to an embodiment of the invention the charging connection device comprises means for determining the angle between the longitudinal axis of the first arm and the horizontal plane, and that the first means for pivoting is configured to pivot the first arm relative to the second arm and/or the second means for pivoting is configured to pivot the second arm relative to the ramp based on the determined angle. The first means for pivoting can be configured to pivot the first arm relative to the second arm and/or the second means for pivoting can be configured to pivot the second arm relative to the ramp in such a manner that the angle between the longitudinal axis of the first arm and the horizontal plane stays essentially at a desired value. The advantage of this is that it enables to keep the first arm in an optimal position for coupling the electrical connector of the charging connection device to a counterpart electrical connector of an electric vessel. If the charging connection device is attached to a ramp that is pivotally mounted to the shore this arrangement enables to compensate the tilting of the ramp due to waves and water level changes.

According to an embodiment of the invention the means for determining the angle between the longitudinal axis of the first arm and the horizontal plane comprises an inclinometer attached to the first arm. By an inclinometer is meant an instrument for measuring angles of tilt with respect to gravity. An inclinometer generates an artificial horizontal plane and measures angular tilt with respect to this horizontal plane. An inclinometer is also known, for example, as a tilt meter, tilt indicator, slope gauge, gradient meter, level gauge and level meter.

A suitable inclinometer to be used in the charging connection device can be, for example, a two-axis MEMS (Micro Electro Mechanical Systems) inclinometer, which enables simultaneous two-dimensional tilt angles measurement. A two-axis MEMS inclinometer can be digitally compensated and precisely calibrated for nonlinearity for operating temperature variation resulting in higher angular accuracy over wider angular measurement range. Preferably, the inclinometer provides an electronic interface based, for example, on CAN (Controller Area Network).

According to an embodiment of the invention the length of the first arm is adjustable so that the electrical connector can be moved in the longitudinal direction of the first arm. The adjustable length of the first arm increases the reach of the charging connection device. The adjustability of the first arm enables the coupling of the electrical connector to counterpart electrical connectors, which are located at different distances from the charging connection device. The first arm may comprise an outer arm and an inner arm that is located inside the outer arm. The inner arm is arranged to be moveable relative to the outer arm so that the length of the first arm can be changed.

According to an embodiment of the invention the charging connection device comprises means for determining the position of a counterpart electrical connector mounted on the electric vessel, and the length of the first arm is configured to be adjustable based on the determined position. The means for determining the position of a counterpart electrical connector are preferably located on the electrical connector. When the position of the counterpart electrical connector has been determined, the length of the first arm can be changed so that the electrical connector of the charging connection device may be coupled to the counterpart electrical connector.

According to an embodiment of the invention the means for determining the position of a counterpart electrical connector mounted on the electric vessel comprises an imaging device attached to the electrical connector. Preferably, the imaging device is located on the mounting face of the electrical connector. The imaging device can be, for example, a digital camera.

According to an embodiment of the invention the electrical connector is pivotally attached to the first end of the first arm and the charging connection device comprises third means for pivoting the electrical connector relative to the first arm. The third means for pivoting the electrical connector relative to the first arm may comprise, for example, one or more of the following: a pneumatic cylinder, a hydraulic cylinder or an electric cylinder attached between the electrical connector and the first arm. The pivotal attachment of the electrical connector to the first arm facilitates the coupling of the electrical connector to the counterpart electrical connector, because it enables to easily arrange the mounting face of the electrical connector to a correct position with respect to the mounting face of the counterpart electrical connector.

According to an embodiment of the invention the third means for pivoting is configured to pivot the electrical connector relative to the first arm based on the determined position of the counterpart electrical connector. Alternatively, or in addition, the third means for pivoting may be configured to pivot the electrical connector relative to the first arm based on the angle between the longitudinal axis of the first arm and the horizontal plane.

According to an embodiment of the invention the charging connection device comprises locking members attached to sides of the electrical connector for locking the electrical connector to a counterpart electrical connector mounted on the electric vessel. The locking members ensure that the electrical connector stays in contact with the counterpart electrical connector when a battery system is charged. The locking members may be provided with a safety feature that releases the electrical connector from the counterpart electrical connector in a situation where the force affecting the locking members exceeds a predetermined value.

According to an embodiment of the invention the charging connection device comprises means for detecting if the electrical connector is connected to a counterpart electrical connector mounted on the electric vessel. The information obtained from the detecting means can be used in deciding when electric power can be supplied to the battery system of the electric vessel.

The present invention also relates to a charging arrangement. A typical charging arrangement according to the invention comprises a charging device for charging an electric vessel, and a charging connection device according to the invention connected to the charging device and attached to a ramp that is pivotally mounted at its first end to the shore. The charging connection device is attached at the second end of the second arm to the ramp. Preferably, the charging connection device is located near a second end of the ramp, i.e. near the end to which an electric vessel is intended to be docked. The pivotal attachment of the ramp allows the second end of the ramp to move up and down as a result of water interaction. The electric vessel can be arranged to be docked to the ramp at its bow or stern. The ramp may comprise at its second end means for mooring the electric vessel from its bow and/or stern to the ramp. The charging device is configured to supply electric power through the charging connection device to a battery system of an electric vessel. The charging device is electrically coupled to the electrical connector of the charging connection device by means of cables or wires.

An advantage of the charging arrangement according to the invention is that it enables to charge a battery system of an electric vessel in an easy, fast and reliable manner. The battery system of the electric vessel can be charged while the vessel is docked. Another advantage of the charging arrangement according to the invention is that since the height position of the electrical connector of the charging connection device can easily be adjusted, the charging device may be easily connected to various electric vessels having counterpart electrical connectors at different heights. Still another advantage of the charging arrangement according to the invention is that it enables to charge an electric vessel in difficult weather conditions because the ramp that is pivotally mounted to the shore and the charging connection device allow compensating the movement of the electric vessel due to waves and water level changes.

According to an embodiment of the invention the second end of the second arm of the charging connection device is pivotally attached to the ramp. Preferably, the charging connection device comprises second means for pivoting the second arm relative to the ramp, which pivoting means is configured to pivot the second arm relative to the ramp arm based on the angle between the longitudinal axis of the first arm and the horizontal plane. The second means for pivoting can be configured to pivot the second arm relative to the ramp in such a manner that the angle between the longitudinal axis of the first arm and the horizontal plane stays essentially at a desired value. The advantage of this is that it enables to keep the first arm in an optimal position for coupling the electrical connector of the charging connection device to a counterpart electrical connector of an electric vessel. This arrangement enables to compensate the tilting of the ramp due to waves and water level changes.

According to an embodiment of the invention the charging arrangement comprises an electric vessel having an electric propulsion motor, a battery system for providing electric power to the electric propulsion motor and a counterpart electrical connector for electrically connecting with the electrical connector of the charging connection device. The counterpart electrical connector is preferably located on a bow or stern of the electric vessel. The electric vessel may alternatively have a counterpart electrical connector both on its bow and stern so that the battery system of the electric vessel can be charged, irrespective of whether the electric vessel is docked at its bow or stern. The electric vessel preferably comprises a ramp that can be lowered on the ramp to allow access for people and vehicles.

According to an embodiment of the invention the counterpart electrical connector comprises guiding plates for guiding the electrical connector of the charging connection device in place. The guiding plates are attached to sides of the counterpart electrical connector. Preferably, the guiding plates are tilted outwards from the mounting face of the counterpart electrical connector in order to facilitate the coupling of the electrical connector to the counterpart electrical connector. The guiding plates may be attached to the sides of the counterpart electrical connector in such a manner that they form a shape of a frustum of a pyramid.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the charging connection device as well as the charging arrangement according to the invention, even though this is not always separately mentioned.

### BRIEF DESCRIPTION OF THE DRAWINGS

- Fig. 1: illustrates a charging connection device according to an embodiment of the invention, and
- fig. 2: illustrates a charging arrangement according to an embodiment of the invention.

### DETAILED DESCRIPTION OF THE DRAWINGS

The same reference signs are used of the same or like components in different embodiments.

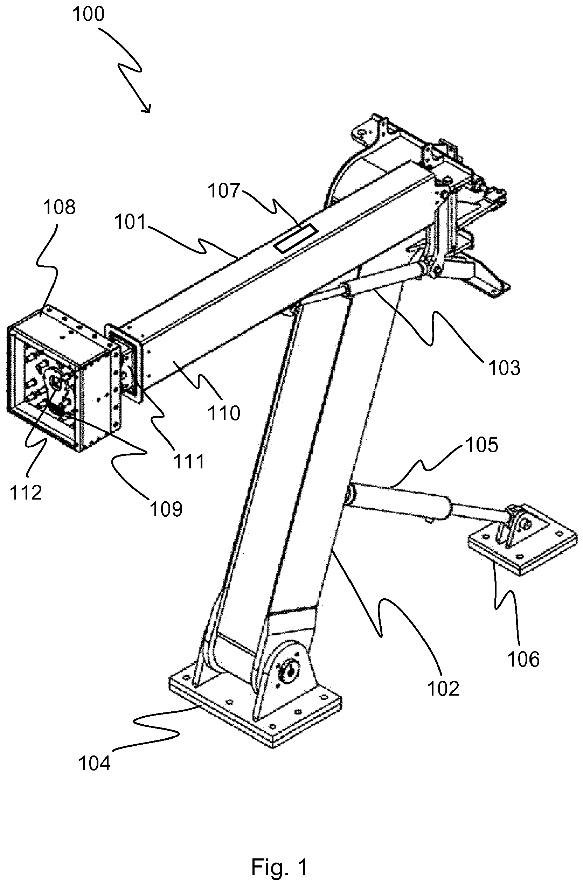

Fig. 1 illustrates a charging connection device according to an embodiment of the invention. The charging connection device 100 comprises two arms 101 and 102, which are pivotally attached at their ends to each other. The relative position between the arms 101 and 102 can be changed by using a cylinder 103 that is attached to the arms 101 and 102.

The arm 102 is intended to be pivotally attached to a ramp (not shown in fig. 1) with a mounting flange 104. The relative position of the arm 102 with respect to the ramp can be changed by using a cylinder 105. One end of the cylinder 105 is attached to the arm 102 and the other end of the cylinder 105 is attachable to the ramp with a mounting flange 106.

The charging connection device 100 comprises an inclinometer 107 that is attached to the arm 101. The inclinometer 107 is used for determining the angle between the longitudinal axis of the arm 101 and the horizontal plane. The determined angle can be utilised to control the operation of the cylinders 103 and 105. For example, the cylinder 103 can be configured to pivot the arm 101 relative to the arm 102 and/or the cylinder 105 can be configured to pivot the arm 102 relative to the ramp in such a manner that the angle between the longitudinal axis of the arm 101 and the horizontal plane stays essentially at a desired value.

An electrical connector 108 is pivotally attached to an end of the arm 101. The electrical connector 108 is used for electrically connecting the charging connection device 100 to an electric vessel (not shown in fig. 1). The electrical connector 108 comprises prongs 109 for inserting into receptacles in a counterpart electrical connector of the electric vessel.

The arm 101 comprises an outer arm 110 and an inner arm 111 that is located inside the outer arm 110. The inner arm 111 is arranged to be moveable with respect to the outer arm 110 so that the length of the arm 101 can be changed. Because the length of the arm 101 is adjustable, the electrical connector 108 can be coupled to counterpart electrical connectors, which are located at different distances from the charging connection device 100. The charging connection device 100 comprises an imaging device 112 located on the mounting face of the electrical connector 108 for determining the position of a counterpart electrical connector. Using this position information, the arm 101 can be extended to the correct length.

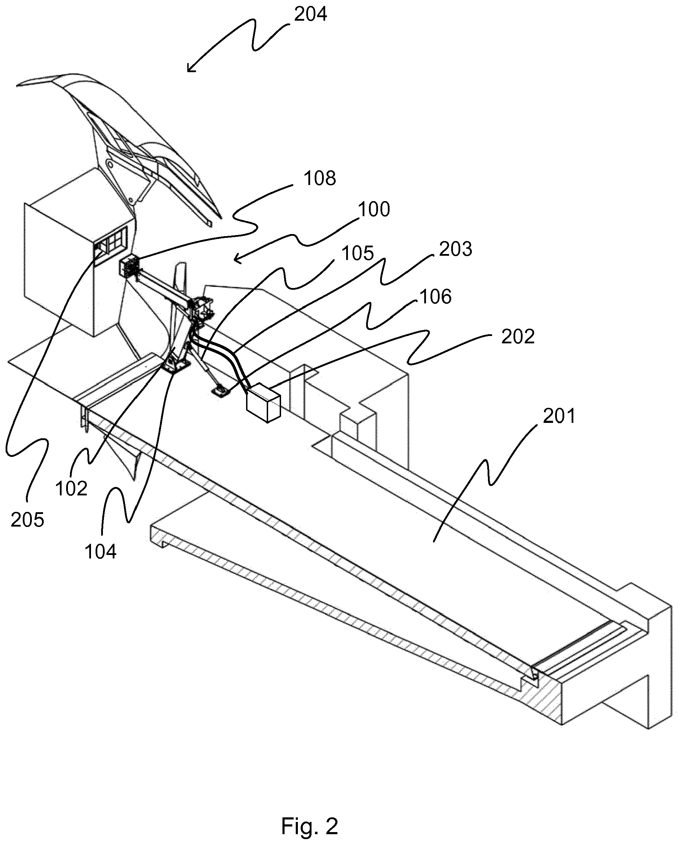

Fig. 2 illustrates a charging arrangement according to an embodiment of the invention. The charging arrangement comprises a ramp 201 that is pivotally mounted to the shore, and a charging device 202 that is electrically connected with cables 203 to the charging connection device 100 of fig. 1. Both the charging device 202 and the charging connection device 100 are attached on the ramp 201, near the end of the ramp 201 to which an electric vessel 204 is docked at its bow.

The charging device 202 is electrically connected with the cables 203 to the electrical connector 108 of the charging connection device 100. The charging device 202 can supply electric power through the electrical connector 108 to the electric vessel 204. The electric vessel 204 comprises on its bow a counterpart electrical connector 205 to which the electrical connector 108 is intended to be coupled and through which electric power is supplied to a battery system (not shown in fig. 2) of the electric vessel 204. The battery system of the electric vessel 204 is charged while the electric vessel 204 is docked to the ramp 201.

The charging connection device 100 is pivotally attached on the ramp 201. The ends of the arm 102 and the cylinder 105 are attached to the ramp 201 with the mounting flanges 104 and 106, respectively. The pivotal attachment of the charging connection device 100 to the ramp 201 enables to arrange and keep the arm 101 in an optimal position for coupling the electrical connector 108 of the charging connection device 100 to the counterpart electrical connector 205 of the electric vessel 204. This arrangement thus enables to compensate the tilting of the ramp 201 due to waves and water level changes.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A charging connection device, comprising:
- an electrical connector for electrically connecting the charging connection device to an electric vessel,
**characterised in that** the charging connection device comprises:
- a first arm having a first end and a second end, the electrical connector being attached to the first end of the first arm,
- a second arm having a first end and a second end, the first end of the second arm being pivotally attached to the second end of the first arm and the second end of the second arm being attachable to a ramp, and
- first means for pivoting the first arm relative to the second arm.

2. The charging connection device according to claim 1, **characterised in that** the charging connection device comprises second means for pivoting the second arm relative to the ramp.

3. The charging connection device according to claim 1 or 2, **characterised in that** the charging connection device comprises means for determining the angle between the longitudinal axis of the first arm and the horizontal plane, and that the first means for pivoting is configured to pivot the first arm relative to the second arm and/or the second means for pivoting is configured to pivot the second arm relative to the ramp based on the determined angle.

4. The charging connection device according to claim 3, **characterised in that** the means for determining the angle between the longitudinal axis of the first arm and the horizontal plane comprises an inclinometer attached to the first arm.

5. The charging connection device according to any of the preceding claims, **characterised in that** the length of the first arm is adjustable so that the electrical connector can be moved in the longitudinal direction of the first arm.

6. The charging connection device according to claim 5, **characterised in that** the charging connection device comprises means for determining the position of a counterpart electrical connector mounted on the electric vessel, and that the length of the first arm is configured to be adjustable based on the determined position.

7. The charging connection device according to claim 6, **characterised in that** the means for determining the position of a counterpart electrical connector mounted on the electric vessel comprises an imaging device attached to the electrical connector.

8. The charging connection device according to claim 6 or 7, **characterised in that** the electrical connector is pivotally attached to the first end of the first arm and the charging connection device comprises third means for pivoting the electrical connector relative to the first arm.

9. The charging connection device according to claim 8, **characterised in that** the third means for pivoting is configured to pivot the electrical connector relative to the first arm based on the determined position of the counterpart electrical connector.

10. The charging connection device according to any of the preceding claims, **characterised in that** the charging connection device comprises locking members attached to sides of the electrical connector for locking the electrical connector to a counterpart electrical connector mounted on the electric vessel.

11. The charging connection device according to any of the preceding claims, **characterised in that** the charging connection device comprises means for detecting if the electrical connector is connected to a counterpart electrical connector mounted on the electric vessel.

12. A charging arrangement, comprising:
- a charging device for charging an electric vessel,
**characterised in that** the charging arrangement comprises a charging connection device according to any of the preceding claims connected to the charging device and attached to a ramp that is pivotally mounted at its first end to the shore.

13. The charging arrangement according to claim 12, **characterised in that** the second end of the second arm of the charging connection device is pivotally attached to the ramp.

14. The charging arrangement according to claim 12 or 13, **characterised in that** the charging arrangement comprises an electric vessel having an electric propulsion motor, a battery system for providing electric power to the electric propulsion motor and a counterpart electrical connector for electrically connecting with the electrical connector of the charging connection device.

15. The charging arrangement according to claim 14, **characterised in that** the counterpart electrical connector comprises guiding plates for guiding the electrical connector of the charging connection device in place.
